(19) Europäisches Patentamt
European Patent Office
Office européen des brevets

(11) **EP 2 053 729 A2**

(12) **EUROPÄISCHE PATENTANMELDUNG**

(43) Veröffentlichungstag:
**29.04.2009 Patentblatt 2009/18**

(51) Int Cl.:
***H02M 3/156*** *(2006.01)*

(21) Anmeldenummer: **08105108.8**

(22) Anmeldetag: **25.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **11.09.2007 AT 14192007**

(71) Anmelder: **Siemens AG Österreich**
**1210 Wien (AT)**

(72) Erfinder: **Hallak, Jalal**
**1220, Wien (AT)**

(74) Vertreter: **Maier, Daniel Oliver**
**Siemens AG**
**Postfach 22 16 34**
**80506 München (DE)**

(54) **Verfahren zur Regelung eines Schaltwandlers**

(57) Die Erfindung betrifft ein Verfahren zur Regelung eines Schaltwandlers, welcher ein Schaltelement (S), eine Speicherdrossel (L) sowie einen Regler umfasst und an dessen Ausgang eine Ausgangsspannung ($U_O$) anliegt, wobei der Regler einen Stromverstärker (CA) umfasst, mittels welchem aus einem zum Speicherdrosselstrom ($I_L$) proportionalen Strommesssignal ($U(I_L)$), welches während eines Schaltzyklus eine ansteigende und eine abfallende Rampe aufweist, ein Steuersignal ($U_{CA}$) als invertiertes und verstärktes Strommesssignal ($U(I_L)$) in Abhängigkeit eines Stromsollwerts ($U(I_{soll})$) gebildet wird und wobei durch Überlagerung dieses Steuersignals ($U_{CA}$) mit einem Sägezahn- oder Dreiecksignal ein pulsweitenmoduliertes Schaltsignal (PWM Out) zur Ansteuerung des Schaltelements (S) gebildet wird. Dabei wird das Sägezahn- oder Dreieckssignal und/oder das Steuersignal ($U_{CA}$) in Abhängigkeit des Strommesssignals ($U(I_L)$)und/oder der Ausgangsspannung ($U_O$) in der Weise variabel verstärkt, dass die ansteigenden Rampen des Steuersignals ($U_{CA}$) immer flacher als die ansteigenden Rampen des Sägezahn- oder Dreiecksignals sind und dass die abfallenden Rampen des Steuersignals ($U_{CA}$) immer flacher als die abfallenden Rampen des Sägezahn- oder Dreiecksignals sind.

FIG 4

EP 2 053 729 A2

**Beschreibung**

Die Erfindung betrifft ein Verfahren zur Regelung eines Schaltwandlers, welcher ein Schaltelement, eine Speicherdrossel sowie einen Regler umfasst und an dessen Ausgang eine Ausgangsspannung anliegt, wobei der Regler einen Stromverstärker umfasst, mittels welchem aus einem zum Speicherdrosselstrom proportionalen Strommesssignal, welches während eines Schaltzyklus eine ansteigende und eine abfallende Rampe aufweist, ein Steuersignal als invertiertes und verstärktes Strommesssignal in Abhängigkeit eines Stromsollwerts gebildet wird und wobei durch Überlagerung dieses Steuersignals mit einem Sägezahn- oder Dreiecksignal ein pulsweitenmoduliertes Schaltsignal zur Ansteuerung des Schaltelements gebildet wird. Des Weiteren betrifft die Erfindung ein Schaltnetzteil zur Durchführung des Verfahrens.

In vielen Bereichen der Elektrotechnik werden Schaltwandler anstelle von Transformatoren eingesetzt, wobei ein niedrigeres Gewicht, der Einsatz für beliebige Spannungsniveaus, höhere Temperaturbereiche, höhere Wirkungsgrade und Kostenvorteile ausschlaggebend sind. Sie finden beispielsweise in Netzteilen zur Anschaltung von Gleichspannungslasten an Versorgungsnetze Anwendung. Ein anderes Anwendungsgebiet ist der Einsatz in Wechselrichtern zur Umwandlung von Gleichstrom in Wechselstrom, beispielsweise um Strom aus alternativen Energiequellen wie Photovoltaikanlagen in ein Wechselspannungsnetz einzuspeisen. Dabei umfasst der Wechselrichter einen Schaltwandler (z.B. Tiefsetzsteller, Hochsetzsteller, Sperrwandler, CUK-Wandler, SEPIC-Wandler oder ZETA-Wandler) zur Erzeugung eines sinusförmigen Stromes und eine Ausgangsstufe zur Umschaltung der Polarität.

Nach dem Stand der Technik sind für Schaltwandler mehrere Regelkonzepte möglich, beispielsweise nach Art des sogenannten Voltage Mode, Current Mode oder Average Current Mode. Welches Regelkonzept zur Anwendung kommt, hängt vom Einsatzgebiet des Schaltwandlers ab.

Für Schaltwandler in Netzteilen, in welchen der Strom als Regelgröße betrachtet werden soll sowie in netzgeführten Wechselrichtern zur Einspeisung eines erzeugten Stromes in ein Wechselstromnetz wird das Regelkonzept nach Art des Average Current Mode bevorzugt. Der Grund liegt dabei in der Schnelligkeit und Genauigkeit dieses Regelkonzepts, was vor allem bei der Einspeisung von Strom in ein öffentliches Stromnetz von Bedeutung ist, da hier von Netzbetreiber in der Regel Grenzwerte für Oberwellen oder Asymmetrien des einzuspeisenden Stromes vorgegeben werden.

Das Average Current Mode Regelkonzept ist dabei für die meisten Schaltwandler anwendbar, wobei im Wesentlichen der zyklisch ansteigende und abfallende Speicherdrosselstrom durch eine Speicherdrossel des Schaltwandlers geregelt wird.

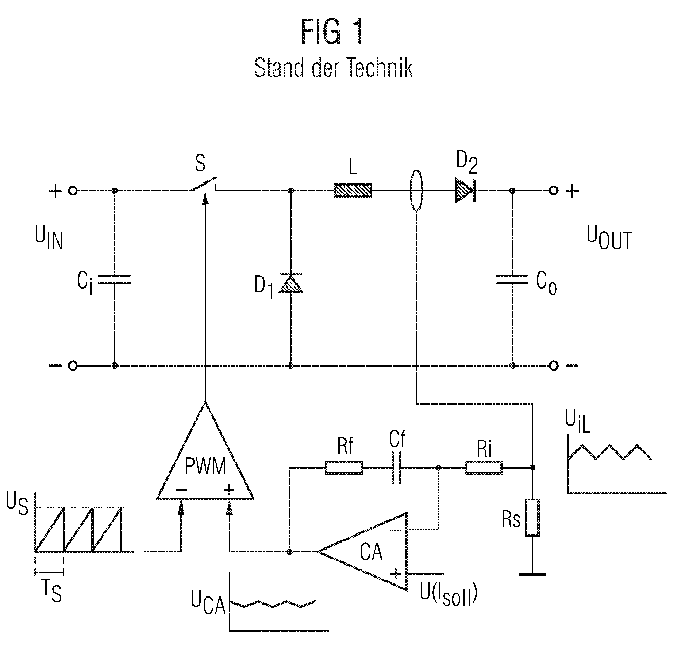

Eine detaillierte Beschreibung des Regelkonzepts findet sich in der Druckschrift Lloyed Dixon, Average Current Mode Control of Switching Power Supplies, Unitrode Product & Application Handbook 1995-96, Topic 5, Unitrode Integrated Circuits Corporation, USA, January 1995. Die Erläuterung des Regelkonzepts erfolgt dabei anhand eines Tiefsetzstellers (vgl. Fig. 1). Dabei handelt es sich um eine Speicherdrosselstromregelung, welche unabhängig von einer Last oder einer Ausgangsspannung ist, wobei der Schaltwandler als Stromquelle angesehen wird.

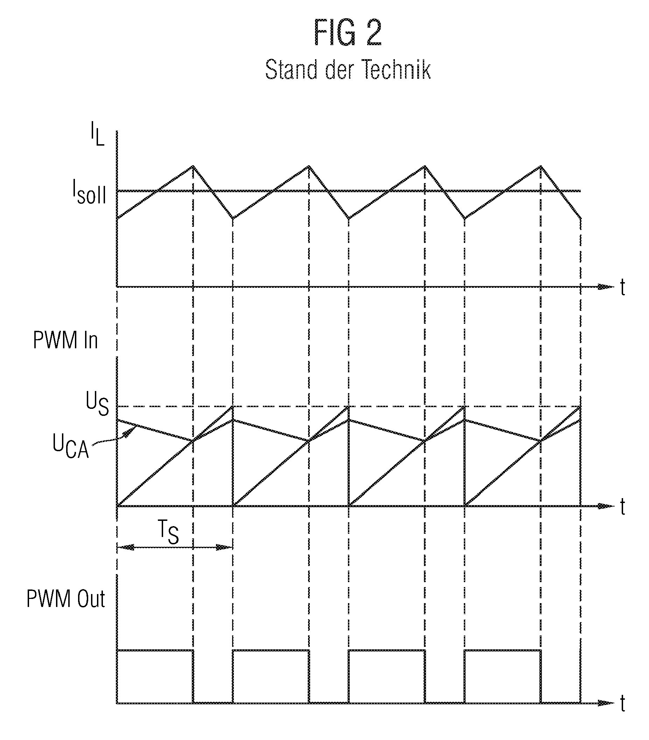

Der Speicherdrosselstrom wird gemessen und in einem Stromverstärker mit einem Stromsollwert verglichen und verstärkt. Am Ausgang des Stromverstärkers liegt ein Steuersignal proportional zum invertieren Speicherdrosselstrom an, welches in einem nachgeschalteten Komparator mit einem Sägezahnsignal verglichen wird. Das pulsweitenmodulierte Signal am Ausgang des Komparators bildet das Schaltsignal zur Ansteuerung eines im Schaltwandler angeordneten Schaltelements (vgl. Fig. 2).

Um eine stabile Regelung ohne subharmonische Oszillation sicherzustellen, ist für die Verstärkung $G_{CA}$ des Stromverstärkers ein Grenzwert angegeben, der von der Spitzenspannung $U_S$ des Sägezahnsignals, der Frequenz $f_S$ des Sägezahnsignals und der fallenden Rampe des Speicherdrosselstromes abhängt, wobei die fallenden Rampe des Speicherdrosselstromes mittels eines Shuntwiderstands $R_S$ gemessen wird und dessen Abfall bei Entladung der Speicherdrossel als Division der Ausgangsspannung $U_O$ des Schaltwandlers durch die Induktivität L der Speicherdrossel ausgedrückt werden kann:

$$G_{CA\ max} = (U_S {}^* f_S {}^* L) / (U_O {}^* R_S)$$

Für Schaltwander mit veränderter Ausgangsspannung muss die maximale Ausgangsspannung zur Ermittlung der Verstärkung des Stromverstärkers herangezogen werden. Das ist beispielsweise bei Wechselrichtern zur Einspeisung von Strom in ein Wechselstromnetz der Fall, weil sich die Ausgangsspannung entsprechend der Netzspannung ständig periodisch ändert. Die Regelung ist dann nur für den Scheitelwert der Ausgangsspannung optimierbar. In den Bereichen geringerer Ausgangsspannung ergeben sich Verzerrungen des einzuspeisenden Stromes.

Ein weiteres Problem betrifft die Speicherdrossel des Schaltwandlers. In Abhängigkeit von einer angeschlossen Last bzw. einem eingespeisten Strom verändert sich die Induktivität der Speicherdrossel. Das Ausmaß der Abhängigkeit richtet sich dabei nach den Eigenschaften des Kernmaterials der Speicherdrossel, wobei beispielsweise Ferritkerne geringe Abhängigkeiten aufweisen und andere, weichere Kernmaterialen (z.B. Molybdenum Permalloy) sehr große Änderungen der Induktivität bedingen. So kann zum Beispiel bei weichen Kernmaterialen die Induktivität über den Arbeitsbereich des Schaltwandlers um den Faktor 1:8 von der Nenninduktivität der Speicherdrossel abweichen, wobei die Induktivität mit zunehmendem Strom abnimmt.

Bei Schaltwandler mit veränderbarer Ausgangsspannung treten somit bei geringen Ausgangsspannungen (z.B. bei der Einspeisung in ein Wechselstromnetz im Bereich des Nullpunkts der Netzsinusspannung) hohe Induktivität der Speicherdrossel auf. Für eine stabile Regelung wäre bei einer geringen Spannung und einer hohen Induktivität der Speicherdrossel eine hohe Verstärkung des Stromverstärkers erforderlich. Diese ist jedoch aufgrund der oben angegeben Bedingung nicht möglich, der zufolge die maximale Verstärkung mit der maximalen Ausgangsspannung festzulegen ist.

Für Wechselrichter, mittels welcher Strom in ein Wechselstromnetz eingespeist wird, ergibt sich bei geringer Ausgangsspannungen im Bereich des Netznulldurchgangs infolge der unzureichenden Verstärkung das Problem, dass der eingespeiste Strom vom Sinusverlauf des Sollwertes abweicht. Eine weitere Folge ist die Einspeisung großer Oberwellen in das Wechselstromnetz.

Der Erfindung liegt die Aufgabe zugrunde, für ein Verfahren der eingangs genannten Art eine Lösung anzugeben, welche eine stabile Regelung über einen weiten Arbeitsbereich eines Schaltwandlers sicherstellt. Eine weitere Aufgabe der Erfindung besteht darin, einen Schaltwandler zur Durchführung des erfindungsgemäßen Verfahrens anzugeben.

Erfindungsgemäß wird die erste Aufgabe gelöst durch ein Verfahren zur Regelung eines Schaltwandlers, welcher ein Schaltelement, eine Speicherdrossel sowie einen Regler umfasst und an dessen Ausgang eine Ausgangsspannung anliegt, wobei der Regler einen Stromverstärker umfasst, mittels welchem aus einem zum Speicherdrosselstrom proportionalen Strommesssignal, welches während eines Schaltzyklus eine ansteigende und eine abfallende Rampe aufweist, ein Steuersignal als invertiertes und verstärktes Strommesssignal in Abhängigkeit eines Stromsollwerts gebildet wird und wobei durch Überlagerung dieses Steuersignals mit einem Sägezahn-oder Dreiecksignal ein pulsweitenmoduliertes Schaltsignal zur Ansteuerung des Schaltelements gebildet wird. Dabei wird das Sägezahn- oder Dreieckssignal und/oder das Steuersignal in Abhängigkeit des Strommesssignals und/oder der Ausgangsspannung in der Weise variabel verstärkt, dass die ansteigenden Rampen des Steuersignals immer flacher als die ansteigenden Rampen des Sägezahn- oder Dreiecksignals sind und dass die abfallenden Rampen des Steuersignals immer flacher als die abfallenden Rampen des Sägezahn- oder Dreiecksignals sind.

Damit wird es möglich, ein Regelkonzept nach Art des Average Current Mode für einen weiten Betriebsbereich zu optimieren. Die nach dem Stand der Technik aufgestellte Bedingung für eine stabile Regelung bleibt auch dann erhalten, wenn die Induktivität der Speicherdrossel oder die Ausgangsspannung starken Schwankungen unterworfen sind.

Durch die variable Verstärkung ist sichergestellt, dass in jedem Abschnitt des Betriebsbereichs eines Schaltwandlers ein gleichmäßiger Verlauf des durch die Schaltvorgänge des Schaltelements bestimmten Drosselstromes vorliegt. Die Schaltvorgänge sind dabei durch die Flanken des pulsweitenmodulierten Schaltsignals festgelegt, welche zu den Zeitpunkten übereinstimmender Werte des Sägezahn- oder Dreiecksignals und des Steuersignals gebildet werden. Aus der Anpassung der Verstärkung des Sägezahn- oder Dreiecksignals und/oder des Steuersignals an die Betriebsbedingungen wie beispielsweise die momentane Induktivität der Speicherdrossel resultieren Signalverläufe, die eine eindeutige Erkennung der Zeitpunkte übereinstimmender Werte des Sägezahn- oder Dreiecksignals und des Steuersignals gewährleisten und somit eine stabile Regelung ohne subharmonische Oszillation sicherstellen.

Ein vorteilhaftes Verfahren ist dadurch gekennzeichnet, dass ein Verlauf des Stromsollwertes in Form einer Sinuskurve vorgegeben wird. Dies ist beispielsweise bei Wechselrichtern zur Einspeisung von Strom in ein Wechselstromnetz der Fall. Mit dem erfindungsgemäßen Verfahren ist eine störungsfreie Einspeisung mit sinusförmigem Stromverlauf verwirklicht.

Von Vorteil ist ein Verfahren, bei dem der Regelung eine Speicherdrosselkennlinie vorgegeben wird, mittels welcher die Induktivität der Speicherdrossel in Abhängigkeit des Speicherdrosselstroms bestimmt wird und bei dem die Verstärkung des Sägezahn- oder Dreieckssignal und/oder des Steuersignal in der Weise eingestellt wird, dass mit abnehmender Induktivität der Speicherdrossel die Verstärkung des Steuersignals abnimmt und/oder die Verstärkung des Sägezahn- oder Dreiecksignal zunimmt. Auf diese Weise ist vor allem bei Speicherdrosseln mit weichen Kernmaterialen sichergestellt, dass die Regelung über den gesamten Betriebsbereich stabil bleibt.

Bei schwankender Ausgangsspannung ist es vorteilhaft, wenn dem Regler ein Messsignal proportional der Ausgangsspannung zugeführt wird und wenn die Verstärkung des Sägezahn- oder Dreieckssignal und/oder des Steuersignal in der Weise eingestellt wird, dass mit zunehmender Ausgangsspannung die Verstärkung des Steuersignals abnimmt und/oder die Verstärkung des Sägezahn- oder Dreiecksignals zunimmt.

Eine einfache Ausprägung des Verfahrens sieht vor, dass das Sägenzahn- oder Dreieckssignal mittels eines Signalgenerators mit steuerbarem Scheitelwert erzeugt wird und dass der Scheitelwert in Abhängigkeit der Induktivität der Speicherdrossel vorgegeben wird und/oder dass der Scheitelwert in Abhängigkeit des Messsignals proportional der Ausgangsspannung vorgegeben wird. Signalgeneratoren mit steuerbarem Scheitelwert sind gängige Schaltungselemente, die in einfacher Weise in eine Schaltungsanordnung integrierbar sind.

Eine andere vorteilhafte Ausprägung des Verfahrens sieht vor, dass die Verstärkung des Steuersignals in der Weise verändert wird, dass einem spannungsgesteuerten Widerstand als ein verstärkungsbestimmendes Beschaltungselement des Stromverstärkers eine der ermittelten Induktivität der Speicherdrossel und/oder der Ausgangsspannung proportionale Steuerspannung zugeführt wird.

Wenn Komponenten zur digitalen Signalverarbeitung zur Verfügung stehen ist es von Vorteil, wenn die Verstärkung des Steuersignals in der Weise verändert wird, dass einem Digitalpotentiometer als ein verstärkungsbestimmendes Beschaltungselement des Stromverstärkers der ermittelte Wert der Induktivität der Speicherdrossel und/oder ein Messsignal proportional der Ausgangsspannung in digitalisierter Form zugeführt wird.

Die Aufgabe der vorliegenden Erfindung wird zudem durch einen Schaltwandler gelöst, ein Schaltelement, eine Speicherdrossel sowie einen Regler umfassend, wobei der Regler einen Stromverstärker umfasst, welchem ein Strommesssignal proportional zum Speicherdrosselstrom und ein Stromsollwert zugeführt sind und an dessen Ausgang als Steuersignal das invertierte und verstärkte Strommesssignal in Abhängigkeit des Sollstromwerts anliegt und wobei ein durch Überlagerung dieses Steuersignals mit einem Sägezahn- oder Dreiecksignal gebildete pulsweitenmodulierte Schaltsignal dem Schaltelement zugeführt ist. Dabei ist zur Erzeugung des Sägezahn- oder Dreiecksignals ein Signalgenerator mit steuerbarem Scheitelwert vorgesehen und/oder der Stromverstärker als beschalteter Operationsverstärker ausgebildet, welcher eine variable Impedanz zur Veränderung der Verstärkung umfasst.

Dabei ist eine vorteilhafte Ausprägung dadurch gekennzeichnet, dass ein Drosselstromaufnehmer zur Erfassung des Speicherdrosselstroms mit einer Auswerteschaltung zur Speicherdrosselkennliniennachbildung und mit einem Verstärkereingang des Stromverstärker verbunden ist, dass dem Stromverstärker zudem der Stromsollwert zugeführt ist und dass der Ausgang des Stromverstärkers mit einem Eingang eines Pulsbreitenmodulators verbunden ist, dass des Weiteren ein der Induktivität der Speicherdrossel proportionales Signal am Ausgang der Auswerteschaltung zur Speicherdrosselkennliniennachbildung dem Signalgenerator mit steuerbarem Scheitelwert zugeführt ist und dass der Ausgang dieses Signalgenerators mit einem zweiten Eingang des Pulsbreitenmodulators verbunden ist, dessen Ausgang an einen Steueranschluss des Schaltelements angeschaltet ist.

Auf diese Weise ist ein Schaltwandler mit gängigen Schaltungskomponenten realisierbar, mittels welcher ein erfindungsgemäßes Verfahren mit optimierter Verstärkung über einen weiten Betriebsbereich bei gleichbleibend stabiler Regelung durchführbar ist.

Die Erfindung wird nachfolgend in beispielhafter Weise unter Bezugnahme auf die beigefügten Figuren erläutert. Es zeigen in schematischer Darstellung:

Fig. 3    Stromverstärker als beschalteter Operationsverstärker ausgebildet

Fig. 4    Verstärkungsanpassung mittels spannungsgesteuertem Widerstand

Fig. 5    Verstärkungsanpassung mittels Digitalpotentiometer

Fig. 6    Verstärkungsanpassung mittels Signalgenerator mit steuerbarem Scheitelwert

Fig. 7    Signalverläufe bei schwachem Drosselstrom

Fig. 8    Signalverläufe bei starkem Drosselstrom

Die Erfindung wird anhand eines Tiefsetzstellers erläutert (vgl. Fig. 1). Eine eingangsseitig an einem Eingangskondensator Ci anliegende Eingangsspannung $U_{IN}$ wird in bekannter Weise mittels eines Schaltelements S, einer Speicherdrossel L, zwei Dioden D1, D2 in eine Ausgangsspannung $U_O$ an einem Ausgangskondensator Co umgewandelt.

Ein Regelkonzept nach Art des Average Current Mode sieht vor, dass der Drosselstrom $I_L$ erfasst und einem Regler zugeführt wird, wobei zur Erfassung eines Drosselstrommesssignals ein Shuntwiderstand Rs angeordnet ist. Der Regler umfasst einen Stromverstärker CA, welcher als Operationsverstärker mit zwei Widerständen Rf, Ri und einem Kondensator Cf als Invertierer beschaltet ist. Somit liegt am negativen Eingang des Operationsverstärkers eine zum Drosselstrom $I_L$ proportionale Spannung $U(I_L)$ und am positiven Eingang ein Stromsollwert $I_{soll}$ an. Am Ausgang des Stromverstärkers CA liegt das Steuersignal $U_{CA}$ als invertiertes und verstärktes Drosselstrommesssignals an, welches dem positiven Komparatoreingang eines Pulsweitenmodulators PWM zugeführt ist. Am negativen Komparatoreingang liegt ein Sägezahnsignal mit einer konstanten Periodendauer $T_S$ und einem Scheitelwert $U_S$ an.

Das pulsweitenmodulierte Schaltsignal am Komparatorausgang des Pulsweitenmodulators PWM ist dem Schaltelement S des Tiefsetzstellers zugeführt.

Wie oben erwähnt ist das Hauptkriterium für die Stabilität der Regelung bzw. das Vermeiden subharmonischer Oszillation folgende Voraussetzung:

Bei ausgeschaltetem Schalter S darf der Anstieg des steigenden Steuersignal $U_{CA}$ am Ausgang des Stromverstärkers CA nicht größer sein als der Anstieg des Sägezahn- bzw. Dreiecksignals.

Die Rampe des Steuersignals $U_{CA}$ ist dabei die mit der Verstärkung $G_{CA}$ des Stromverstärkers multiplizierte invertierte Rampe des Drosselstromes $U_O/L$, wobei der Drosselstrom $I_L$ mit dem Shuntwiderstand $R_S$ gemessenen wird:

$$(U_O(t)/L(t))*R_S*G_{CA},$$

wobei sich $U_O$ und/oder $L$ über der Zeit ändern

Die Rampe des Sägezahnsignals wird als Division der Spitzenspannung $U_S$ und der Periodendauer $T_S$ bzw. als Multiplikation der Spitzenspannung $U_S$ mit der Frequenz $f_S$ des Signals angegeben:

$$U_S/T_S = U_S*f_S$$

Die Bedingung für eine stabile Regelung lautet dann wie folgt:

$$(U_O(t)/L(t))*R_S*G_{CA} < U_S*f_S$$

Eine veränderliche Verstärkung des Steuersignals errechnet sich demnach wie folgt:

$$G_{CA}(t) < (U_S*f_S*L(t))/(U_O(t)*R_S)$$

Für eine veränderliche Spitzenspannung $U_S$ des Sägezahnsignals besteht folgende Bedingung:

$$U_S(t) > (U_O(t)*R_S*G_{CA})/(L(t)*f_S)$$

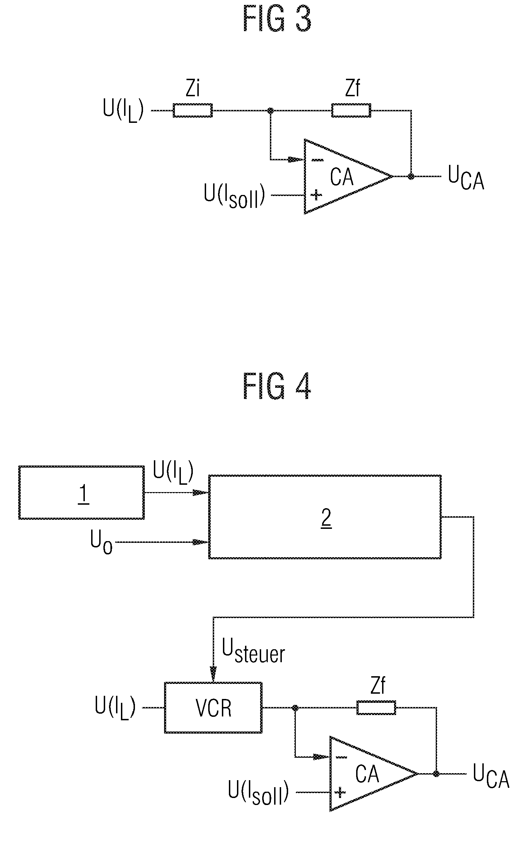

Figur 3 zeigt die den Stromverstärker CA vereinfacht als mit zwei Impedanzen Zi, Zf beschalteten Operationsverstärker. Die Verstärkung ist gleich der Division der zwischen invertierendem Eingang und Ausgang geschaltete Impedanz Zf durch die vor dem invertierenden Eingang angeordnete Impedanz Zi:

$$G_{CA} = -(Zf/Zi)$$

Die vor dem invertierenden Eingang angeordnete, erste Impedanz Zi ist dabei zumeist ein rein ohmscher Widerstand. Die zweite Impedanz Zf besteht üblicherweise aus einem Widerstand und einer Kapazität, deren Grenzfrequenz normalerweise um das 10-fache niedriger als die Schaltfrequenz des Schaltwandlers ist.

Über die erste Impedanz Zi liegt am invertierenden Eingang das zum Drosselstrom $I_L$ proportionale Strommesssignal $U(I_L)$ an. Der zweite Eingang des Operationsverstärkers ist mit einer Spannung $U(I_{soll})$ proportional zum Stromsollwert $I_{soll}$ beaufschlagt. Am Ausgang ist das Steuersignal $U_{CA}$ zur Generierung des pulsweitenmodulierten Schaltsignals PWM Out abgreifbar.

Um eine variable Verstärkung des Reglers zu erzielen, wird entweder die erste Impedanz Zi oder der Widerstand der zweiten Impedanz Zf als spannungsgesteuerter Widerstand VCR ausgebildet. Bei der zweiten Variante muss jedoch die Grenzfrequenz beibehalten werden.

Eine beispielhafte Ausprägung der ersten Variante ist in Figur 4 dargestellt. Ein Drosselstromaufnehmer 1 leitet das Strommesssignal $U(I_L)$ an eine Auswerteschaltung 2 zur Ermittlung der optimalen Verstärkungseinstellung weiter. In der Auswerteschaltung 2 ist beispielsweise die Kennlinie der Speicherdrossel L abgespeichert, sodass daraus in Abhängigkeit vom Strommesssignal $U(I_L)$ die Verstärkung $G_{CA}$ ableitbar ist. Die ermittelte Verstärkungseinstellung liegt als Steuerspannung $U_{steuer}$ an dem spannungsgesteuerten Widerstand VCR an. Dieses Verfahren ist vor allem bei Speicherdrosseln mit weichem Kern von Vorteil.

Bei Speicherdrosseln mit hartem Kern (z.B. Ferritkern) steht die Anpassung an eine sich ändernde Ausgangsspannung $U_O$ im Vordergrund. Dabei wird der Auswerteschaltung 2 die gemessene oder vorgegebene Ausgangsspannung $U_O$ zugeführt. In der Auswerteschaltung 2 ist für jede Ausgangsspannung $U_O$ eine Verstärkung $G_{CA}$ hinterlegt, wobei bei hoher Ausgangsspannung $U_O$ eine geringe Verstärkung $G_{CA}$ und bei geringer Ausgangsspannung $U_O$ eine große Verstärkung $G_{CA}$ eingestellt wird.

Dabei ist zu beachten, dass bei als Stromquellen arbeitenden Schaltwandlern (z.B. Wechselrichter zur Anschaltung von Solarzellen an ein Wechselstromnetz) eine weitgehende Kompensation von Änderungen der Ausgangsspannung $U_O$ auftritt. Die Regelung bleibt dabei stabil, weil bei geringer Ausgangsspannung $U_O$ auch ein geringer Strom fließt.

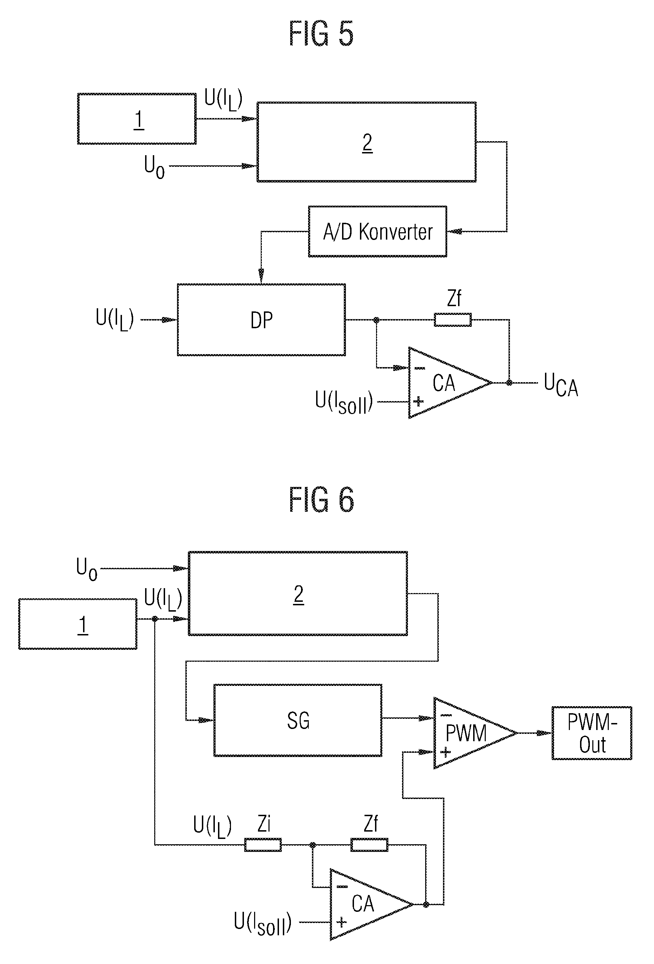

Alternativ dazu kann anstelle eines spannungsgesteuerten Widerstands VCR ein Digitalpotentiometer DP oder ein sogenannter Current Multiplying D/A Konverter eingesetzt werden. Das entsprechende Schaltbild ist in Figur 5 dargestellt. Zwischen der Auswerteschaltung 2 und dem Digitalpotentiometer 2 ist ein A/D Konverter eingesetzt, der die Steuerspannung $U_{steuer}$ in ein digitales Signal zur Ansteuerung des Digitalpotentiometers 2 umwandelt.

Eine andere Ausprägung der Erfindung ist in Figur 6 dargestellt. Dabei wird Anstelle des Steuersignals das Sägezahn- bzw. Dreieckssignal in Abhängigkeit einer sich veränderten Drosselinduktivität oder Ausgangsspannung $U_O$ verstärkt. Der Stromverstärker CA ist mit konstanten Impedanzen Zi, Zf beschalten, sodass sich eine gleichbleibende Verstärkung ergibt. Das mittels Drosselstromaufnehmer 1 erfasste Strommesssignal $U(I_L)$ ist wieder über die erste Impedanz Zi dem invertierenden Eingang des Stromverstärkers CA zugeführt. Der zweite Eingang des Stromverstärkers CA ist mit dem Stromsollwert $U(I_{soll})$ beaufschlagt.

Das Steuersignal $U_{CA}$ am Ausgang des Stromverstärkers ist dem positiven Komparatoreingang des Pulsweitenmodulators PWM zugeführt. Der negative Komparatoreingang ist mit einem Sägezahn- bzw. Dreiecksignalgenerator SG mit steuerbarem Scheitelwert verbunden. Gesteuert wird dieser Sägezahn- bzw. Dreiecksignalgenerator SG mit einer Auswerteschaltung 2, der das Strommesssignal $U(I_L)$ und/oder die veränderliche Ausgangsspannung $U_O$ zugeführt sind.

Bei einer Speicherdrossel L mit weichem Kern ist in der Auswerteschaltung 2 die Kennlinie der Drossel nachgebildet, beispielsweise in einem digitalen Speicher oder mittels analoger Bauelemente. Dem aktuellen Strommesssignalwert wird der entsprechende Induktionswert L zugeordnet und mittels diesem nach der oben angegebenen Bedingung die optimale Verstärkung des Sägezahn- bzw. Dreiecksignals ermittelt. Das am Ausgang des Pulsbreitenmodulators PWM anliegende Schaltsignal PWM Out ist dem Schaltelements S des Schaltwandlers zur Bestimmung der Ein- und Ausschaltzeitpunkte zugeführt.

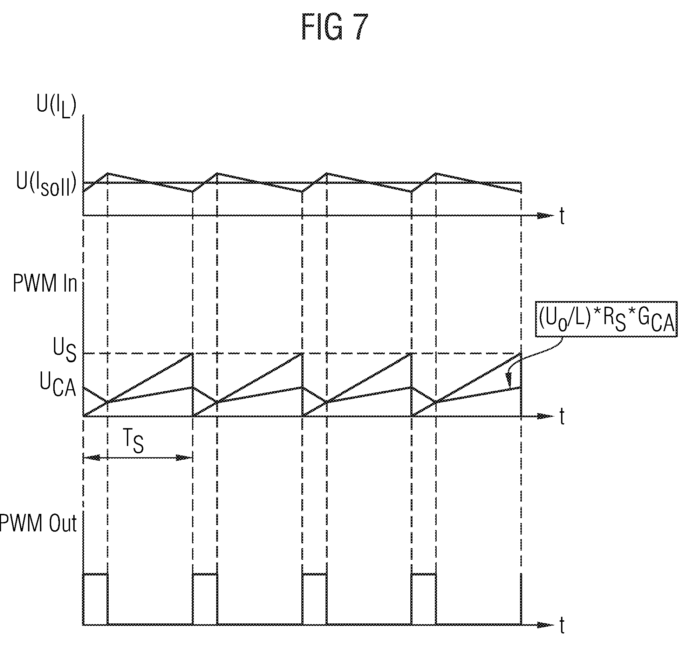

Der Verlauf der Signale über der Zeit t bei niedrigem Stromsollwert $I_{soll}$ ist in Figur 7 dargestellt. Das oberste Diagramm zeit den Verlauf des Strommesssignals $U(I_L)$ und des Stromsollwerts $U(I_{soll})$ an den Eingängen des Stromverstärkers CA. Der Stromsollwert $U(I_{soll})$ ändert seinen Wert im Verhältnis zur Taktrate des Schaltwandlers sehr langsam und ist deshalb idealisiert als konstanter Wert dargestellt. Während einer Einschaltphase des Schaltelements S steigt der Drosselstrom $I_L$ linear an, bis das Schaltelement S abschaltet und der Drosselstrom $I_L$ wieder bis zum nächsten Taktzyklus linear abfällt. Bei einer idealen Regelung entspricht dabei der Mittelwert des Drosselstromes $I_L$ dem vorge-gebenen Stromsollwert $I_{soll}$.

Im mittleren Diagramm sind die Eingangssignale PWM In des Pulsbreitenmodulators PWM dargestellt. Das Steuersignal $U_{CA}$ entspricht dem invertierten und verstärken Strommesssignal $U(I_{soll})$, wobei die ansteigenden Rampen entsprechend der oben angegeben Bedingung von der Ausgangsspannung $U_O$, der Drosselinduktivität L, dem Shuntwiderstand $R_S$ und der Verstärkung $G_{CA}$ des Stromverstärkers CA abhängen.

Während einer Schaltperiode mit der Periodendauer $T_S$ fällt das Steuersignal $U_{CA}$ bei eingeschaltetem Schaltelement S ab, bis der Wert des Steuersignals $U_{CA}$ dem Wert des Sägezahn- bzw. Dreiecksignals entspricht. Dieser Zeitpunkt kennzeichnet den Ausschaltzeitpunkt des Schaltelements S. Im untersten Diagram ist entsprechend eine abfallenden Flanke des pulsweitenmodulierten Schaltsignals PWM Out dargestellt. Bei ausgeschaltetem Schaltelement S steigt das Steuersignal $U_{CA}$ wieder linear an, wobei entsprechend der oben angegeben Bedingung die Rampe flacher als die Rampe des Sägezahn- bzw. Dreiecksignals sein muss. Eine Wertübereinstimmung der beiden Signale kennzeichnet den nächsten Einschaltzeitpunkt des Schaltelements S als Beginn einer neuen Schaltperiode. Dementsprechend ist im unteren Diagramm eine ansteigende Flanke des pulsweitenmodulierten Schaltsignals PWM Out dargestellt.

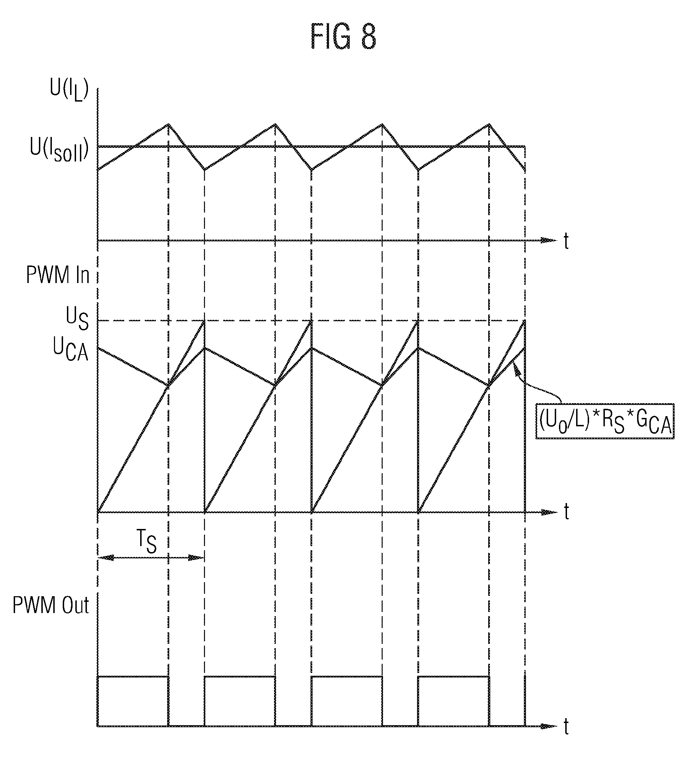

In Figur 8 ist die Auswirkung eines Anstiegs des Stromsollwerts $U(I_{soll})$ auf die Signalverläufe bei Anwendung einer Methode gemäß Figur 6 dargestellt. Gegenüber dem Steuersignalverlauf in Figur 7 weist das Steuersignal aufgrund des erhöhten Stromsollwertes $U(I_{soll})$ steilere Rampen auf. Um die oben angegebene Bedingung weiterhin zu erfüllen und damit eine stabile Regelung sicherzustellen, wird auch die ansteigende Rampe des Sägezahn- bzw. Dreiecksignals steiler eingestellt. Die Annäherung der beiden Signale erfolgt also weiterhin an der abfallenden Flanke des Sägezahnsignals in einem Bereich deutlich unterhalb des Scheitelwerts, sodass die Einschaltzeitpunkte des Schaltelement S weiterhin klar definiert sind.

Ohne diese Maßnahme wären die Rampen der beiden Signale entgegen der oben angegeben Bedingung gegebenenfalls gleich steil oder die Rampe des Steuersignals wäre steiler als die Rampe des Sägezahn- oder Dreiecksignals. Dann würde die Annäherung der Signale im Bereich des Scheitelwerts des Sägezahnsignals erfolgen und die Wertübereinstimmung würde im Pulsbreitenmodulator nur ungenau erkannt werden. Das Resultat wäre die unerwünschte subharmonische Oszillation des Drosselstromes $I_L$.

**Patentansprüche**

1. Verfahren zur Regelung eines Schaltwandlers, welcher ein Schaltelement (S), eine Speicherdrossel (L) sowie einen Regler umfasst und an dessen Ausgang eine Ausgangsspannung ($U_O$) anliegt, wobei der Regler einen Stromverstärker (CA) umfasst, mittels welchem aus einem zum Speicherdrosselstrom ($I_L$) proportionalen Strommesssignal ($U(I_L)$), welches während eines Schaltzyklus eine ansteigende und eine abfallende Rampe aufweist, ein Steuersignal ($U_{CA}$) als invertiertes und verstärktes Strommesssignal ($U(I_L)$) in Abhängigkeit eines Stromsollwerts ($U(I_{soll})$) gebildet wird und wobei durch Überlagerung dieses Steuersignals ($U_{CA}$) mit einem Sägezahn-oder Dreiecksignal ein pulsweitenmoduliertes Schaltsignal (PWM Out) zur Ansteuerung des Schaltelements (S) gebildet wird, **dadurch gekennzeichnet, dass** das Sägezahn- oder Dreieckssignal und/oder das Steuersignal ($U_{CA}$) in Abhängigkeit des Strommesssignals ($U(I_L)$) und/oder der Ausgangsspannung ($U_O$) in der Weise variabel verstärkt wird, dass die ansteigenden Rampen des Steuersignals ($U_{CA}$) immer flacher als die ansteigenden Rampen des Sägezahn- oder Dreiecksignals sind und dass die abfallenden Rampen des Steuersignals ($U_{CA}$) immer flacher als die abfallenden Rampen des Sägezahn- oder Dreiecksignals sind.

2. Verfahren nach Anspruch 1, **dadurch gekennzeichnet, dass** ein Verlauf des Stromsollwertes ($U(I_{soll})$) in Form einer Sinuskurve vorgegeben wird.

3. Verfahren nach Anspruch 1 oder 2, **dadurch gekennzeichnet, dass** der Regelung eine Speicherdrosselkennlinie vorgegeben wird, mittels welcher die Induktivität der Speicherdrossel (L) in Abhängigkeit des Speicherdrosselstroms ($I_L$) bestimmt wird und dass die Verstärkung des Sägezahn- oder Dreieckssignal und/oder des Steuersignal ($U_{CA}$) in der Weise eingestellt wird, dass mit abnehmender Induktivität der Speicherdrossel (L) die Verstärkung des Steuersignals ($U_{CA}$) abnimmt und/oder die Verstärkung des Sägezahn- oder Dreiecksignal zunimmt.

4. Verfahren nach einem der Ansprüche 1 bis 3, **dadurch gekennzeichnet, dass** dem Regler ein Messsignal proportional der Ausgangsspannung ($U_O$) zugeführt wird und dass die Verstärkung des Sägezahn- oder Dreieckssignal und/oder des Steuersignal ($U_{CA}$) in der Weise eingestellt wird, dass mit zunehmender Ausgangsspannung ($U_O$) die Verstärkung des Steuersignals ($U_{CA}$) abnimmt und/oder die Verstärkung des Sägezahn- oder Dreiecksignals zunimmt.

5. Verfahren nach Anspruch 3 oder 4, **dadurch gekennzeichnet, dass** das Sägenzahn- oder Dreieckssignal mittels eines Signalgenerators (SG) mit steuerbarem Scheitelwert ($U_S$) erzeugt wird und dass der Scheitelwert ($U_S$) in Abhängigkeit der Induktivität der Speicherdrossel (L) vorgegeben wird.

6. Verfahren nach Anspruch 4, **dadurch gekennzeichnet, dass** das Sägenzahn- oder Dreieckssignal mittels eines Signalgenerators (SG) mit steuerbarem Scheitelwert ($U_S$) erzeugt wird und dass der Scheitelwert ($U_S$) in Abhängigkeit des Messsignals proportional der Ausgangsspannung ($U_O$) vorgegeben wird.

7. Verfahren nach Anspruch 3 oder 4, **dadurch gekennzeichnet, dass** die Verstärkung des Steuersignals ($U_{CA}$) in der Weise verändert wird, dass einem spannungsgesteuerten Widerstand (VCR) als ein verstärkungsbestimmendes Beschaltungselement des Stromverstärkers (CA) eine der ermittelten Induktivität der Speicherdrossel (L) proportionale Steuerspannung ($U_{steuer}$) zugeführt wird.

8. Verfahren nach Anspruch 4, **dadurch gekennzeichnet, dass** die Verstärkung des ($U_{CA}$) Steuersignals in der Weise verändert wird, dass einem spannungsgesteuerten Widerstand (VCR) als ein verstärkungsbestimmendes Beschaltungselement des Stromverstärkers (CA) eine Steuerspannung ($U_{CA}$) proportional der Ausgangsspannung ($U_O$) zugeführt wird.

9. Verfahren nach Anspruch 3 oder 4, **dadurch gekennzeichnet, dass** die Verstärkung des Steuersignals ($U_{CA}$) in der Weise verändert wird, dass einem Digitalpotentiometer (DP) als ein verstärkungsbestimmendes Beschaltungselement des Stromverstärkers (CA) der ermittelte Wert der Induktivität der Speicherdrossel (L) in digitalisierter Form zugeführt wird.

10. Verfahren nach Anspruch 4, **dadurch gekennzeichnet, dass** die Verstärkung des Steuersignals ($U_{CA}$) in der Weise verändert wird, dass einem Digitalpotentiometer (DP) als ein verstärkungsbestimmendes Beschaltungselement des Stromverstärkers (CA) ein Messsignal proportional der Ausgangsspannung ($U_O$) in digitalisierter Form zugeführt wird.

11. Schaltwandler, ein Schaltelement (S), eine Speicherdrossel (L) sowie einen Regler umfassend, wobei der Regler einen Stromverstärker (CA) umfasst, welchem ein Strommesssignal ($U(I_L)$) proportional zum Speicherdrosselstrom ($I_L$) und ein Stromsollwert ($U(I_{soll})$) zugeführt sind und an dessen Ausgang als Steuersignal ($U_{CA}$) das invertierte und verstärkte Strommesssignal ($U(I_L)$) in Abhängigkeit des Sollstromwerts ($U(I_{soll})$) anliegt und wobei ein durch Überlagerung dieses Steuersignals ($U_{CA}$) mit einem Sägezahn-oder Dreiecksignal gebildete pulsweitenmodulierte Schaltsignal (PWM Out) dem Schaltelement (S) zugeführt ist, **dadurch gekennzeichnet, dass** zur Erzeugung des Sägezahn-oder Dreiecksignals ein Signalgenerator (SG) mit steuerbarem Scheitelwert ($U_S$) vorgesehen ist und/ oder dass der Stromverstärker (CA) als beschalteter Operationsverstärker ausgebildet ist, welcher eine variable Impedanz (Zi) zur Veränderung der Verstärkung umfasst.

12. Schaltwandler nach Anspruch 11, **dadurch gekennzeichnet, dass** ein Drosselstromaufnehmer (1) zur Erfassung des Speicherdrosselstroms ($I_L$) mit einer Auswerteschaltung (2) zur Speicherdrosselkennliniennachbildung und mit einem Verstärkereingang des Stromverstärker (CA) verbunden ist, dass dem Stromverstärker (CA) zudem der Stromsollwert ($U(I_{soll})$) zugeführt ist und dass der Ausgang des Stromverstärkers (CA) mit einem Eingang eines Pulsbreitenmodulators (PWM) verbunden ist, dass des Weiteren ein der Induktivität der Speicherdrossel (L) proportionales Signal am Ausgang der Auswerteschaltung (2) zur Speicherdrosselkennliniennachbildung dem Signalgenerator (SG) mit steuerbarem Scheitelwert ($U_S$) zugeführt ist und dass der Ausgang dieses Signalgenerators (SG) mit einem zweiten Eingang des Pulsbreitenmodulators (PWM) verbunden ist, dessen Ausgang an einen Steueranschluss des Schaltelements (S) angeschaltet ist.

# FIG 1

Stand der Technik

# FIG 2
## Stand der Technik

## FIG 3

$U(I_L)$ — Zi — — Zf —

$U(I_{soll})$ — CA — $U_{CA}$

## FIG 4

1

$U(I_L)$

$U_0$

2

$U_{steuer}$

$U(I_L)$ — VCR — Zf

$U(I_{soll})$ — CA — $U_{CA}$

## FIG 5

## FIG 6

# FIG 7

# FIG 8

$(U_0/L)*R_S*G_{CA}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Druckschrift Lloyed Dixon, Average Current Mode Control of Switching Power Supplies, Unitrode Product & Application Handbook. Unitrode Integrated Circuits Corporation, Januar 1995